Europäisches Patentamt

European Patent Office

Office européen des brevets

(11) Numéro de publication: **0 439 806 B1**

# FASCICULE DE BREVET EUROPEEN

(45) Date de publication de fascicule du brevet: **17.08.94**  (51) Int. Cl.5: **A23L 1/16**, A23P 1/08

(21) Numéro de dépôt: **90125158.7**

(22) Date de dépôt: **21.12.90**

(54) **Procédé de préparation de pâtes farcies séchées et pâtes ainsi obtenues.**

(30) Priorité: **02.02.90 CH 346/90**

(43) Date de publication de la demande:
**07.08.91 Bulletin  91/32**

(45) Mention de la délivrance du brevet:
**17.08.94 Bulletin  94/33**

(84) Etats contractants désignés:
**AT BE CH DE DK ES FR GB GR IT LI LU NL SE**

(56) Documents cités:
**DE-U- 8 609 454**
**FR-A- 1 176 585**

(73) Titulaire: **SOCIETE DES PRODUITS NESTLE S.A.**
**Case postale 353**
**CH-1800 Vevey (CH)**

(72) Inventeur: **Cuperus, Hermann Jacob**
**Furtstrasse 4**
**CH-8700 Kuesnacht (CH)**

Rank Xerox (UK) Business Services
(3. 10 / 3. 0 9 / 3. 3. 3)

EP 0 439 806 B1

## Description

La présente invention a trait à un procédé de préparation de pâtes alimentaires farcies, par exemple de type raviolis ou tortellinis, se présentant sous forme séchée, ainsi qu'à une pâte alimentaire farcie et séchée ainsi obtenue.

Un procédé connu de préparation de pâtes alimentaires farcies séchées, tel que décrit dans le brevet JP 78-127843, consiste à appliquer à l'intérieur d'une enveloppe de pâte une émulsion aqueuse d'une huile comestible, à y introduire une farce déshydratée, à fermer l'enveloppe sur son pourtour puis à la sécher.

Un autre procédé, décrit dans DE-U-8609454, consiste à préparer un pâton constitué de deux feuilles superposées, que l'on peut conserver tel quel, puis à le remplir avec une farce.

Un autre procédé, décrit dans le brevet US 2950978, consiste à former une enveloppe de pâte résistante au séchage par addition d'un agent "anti-craquelage", tel qu'un sucre ou du glycérol, à y introduire une farce déshydratée, à fermer l'enveloppe sur son pourtour, à percer le centre de l'enveloppe et à la sécher.

Ce procédé présente toutefois l'inconvénient de nécessiter l'emploi d'un additif afin d'éviter le craquèlement autour des perforations, lors du séchage.

La présente invention a pour but de pallier les inconvénients de l'art antérieur et de proposer deux procédés de préparation de pâtes alimentaires farcies séchées ne nécessitant pas l'emploi d'additifs et permettant de faciliter le séchage et/ou la reconstitution du produit.

A cet effet, selon un premier procédé de la présente invention, on prépare une enveloppe de pâte alimentaire à partir de deux feuilles de pâte superposées ou d'une feuille de pâte repliée sur elle-même, on introduit une farce dans ladite enveloppe, on introduit une aiguille entre les bords des feuilles superposées ou de la feuille repliée sur elle-même, on scelle l'enveloppe sur son pourtour par pincement des bords des feuilles superposées ou de la feuille repliée sur elle-même, on retire l'aiguille après le pincement, de manière à aménager au moins une ouverture dans le pourtour scellé de l'enveloppe, et l'on sèche la pâte farcie obtenue.

Selon un second procédé de la présente invention, on prépare une enveloppe de pâte alimentaire à partir de deux feuilles de pâte superposées ou d'une feuille de pâte repliée sur elle-même, on introduit une farce dans ladite enveloppe, on scelle l'enveloppe sur son pourtour par pincement des bords des feuilles superposées ou de la feuille repliée sur elle-même, tout en laissant un segment au moins desdits bords exempt de pincement, de manière à aménager au moins une ouverture dans le pourtour scellé de l'enveloppe, et l'on sèche la pâte farcie obtenue.

Un avantage des procédés selon la présente invention est de permettre un séchage rapide de pâtes alimentaires farcies, de même qu'une reconstitution rapide et facile de ces pâtes. Un autre avantage de ces procédés est de permettre l'obtention de pâtes alimentaires farcies séchées pouvant se conserver pendant un long temps en parfait état.

Un autre avantage est de proposer des procédés économiques et simples dans leur mise en oeuvre.

Les présents procédés peuvent permettre de réaliser des pâtes alimentaires farcies séchées de formes et dimensions diverses qui, sur le plan organoleptique, sont comparables à des pâtes farcies traditionnelles, mais qui peuvent être rapidement reconstituées pour la consommation, par exemple en versant dessus un liquide chaud tel qu'un bouillon ou une sauce à 70-90°C ou de l'eau bouillante et en laissant reposer pendant un temps bref de l'ordre de 3 à 5 minutes, ou encore par immersion dans un liquide froid et passage rapide dans un four microondes pendant 2 à 6 minutes.

Le présent procédé peut aussi permettre de réaliser un plat complet, comprenant par exemple des pâtes farcies, de la sauce et des légumes, se présentant sous forme déshydratée.

Le présent procédé de préparation de pâtes alimentaires farcies et séchées peut être mis en oeuvre en dis-continu, en semi-continu ou, de préférence, en continu.

Pour mettre en oeuvre le présent procédé, on prépare tout d'abord une pâte alimentaire crue.

A cet effet, on peut préparer un mélange comprenant un produit de mouture de céréale et de l'eau.

On peut utiliser, par exemple, de la farine et/ou de la semoule, obtenues par mouture de grains de céréales telles que le blé dur, le blé tendre, le riz, le maïs. On peut ajouter au produit de mouture des additifs tels que des oeufs frais, congelés ou déshydratés, du sel, des épices, des aromates, des émulsifiants, et/ou des matières colorantes naturelles telles que la tomate ou l'épinard. On peut aussi ajouter de l'eau en quantité suffisante afin d'obtenir un mélange présentant un taux de matière sèche de l'ordre de 65-70% en poids.

On peut pétrir le mélange, par exemple pendant 10 à 40 minutes, afin de lui conférer une texture pâteuse et homogène.

On peut ensuite former une feuille mère de pâte, par exemple par extrusion et/ou par laminage.

Pour ce faire, on peut notamment former un boudin de pâte par extrusion, puis le laminer sous plusieurs paires de rouleaux successives, jusqu'à obtention d'une feuille mère présentant l'épaisseur souhaitée.

On peut ensuite découper cette feuille mère en feuilles de forme déterminée pour préparer lesdites enveloppes de pâte.

On peut, par exemple, découper cette feuille mère en feuilles de forme rectangulaire, par exemple de 20-40 mm de largeur sur 40-80 mm de longueur, puis former ensuite par pliage des enveloppes de pâte en forme de carrés, de 20-40 mm de côté.

On peut aussi découper cette feuille mère en feuilles de forme circulaire, par exemple de 20-40 mm de diamètre, puis former par pliage des enveloppes de pâte en forme de croissants de 20-40 mm de diamètre.

On peut encore, par exemple, découper cette feuille mère en bandes, de 20-40 mm de côté par exemple, et superposer deux à deux ces bandes pour les découper en feuilles carrées superposées.

On peut introduire une farce dans chaque enveloppe de pâte.

La farce peut être constituée par exemple de viande hachée, de légumes, de poisson, de fruits de mer, de fromage.

La farce peut être fraîche ou avoir été préalablement partiellement déshydratée, par exemple de manière à atteindre un taux de matière sèche de 75-80% en poids. La farce peut aussi avoir été préalablement précuite. On peut introduire la farce dans l'enveloppe par tout moyen adéquat, par exemple à l'aide d'un piston.

On peut introduire, par exemple, 0,2 à 0,8 grammes de farce fraîche par enveloppe, selon la grandeur et la forme de ladite enveloppe.

On peut ensuite sceller l'enveloppe de pâte sur son pourtour par pincement des bords des feuilles superposées ou de la feuille repliée sur elle-même, par exemple en utilisant une formeuse ou une presse adéquate.

Les pâtes alimentaires farcies obtenues peuvent être blanchies, par exemple pendant 2-3 minutes dans l'eau bouillante ou à la vapeur.

Les pâtes blanchies peuvent être ensuite légèrement refroidies jusqu'à une température de l'ordre de 80-85°C. Les pâtes peuvent alors être séchées, par exemple dans un séchoir pendant 4-8 heures à 80°-82°C, de manière à atteindre un taux de matière sèche de 95-97% en poids et une activité de l'eau de 0,2-0,3.

Dans le procédé selon la présente invention, on prévoit donc au moins une ouverture dans le pourtour scellé de l'enveloppe.

Ces ouvertures peuvent faciliter le séchage de la pâte farcie en permettant à la vapeur d'eau de s'échapper de l'enveloppe et éventuellement de la farce.

Ces ouvertures peuvent aussi faciliter la réhydratation de la pâte farcie en permettant au liquide de s'introduire plus rapidement dans l'enveloppe et dans la farce.

On peut prévoir ces ouvertures sur une partie quelconque du pourtour de l'enveloppe de pâte. Ces ouvertures peuvent, par exemple, être prévues dans un des côtés de l'enveloppe, de préférence au milieu d'un côté, ou dans un de ses coins.

On peut prévoir une ou plusieurs ouvertures sur le pourtour de l'enveloppe de pâte. On peut, par exemple, pour une pâte farcie de type ravioli, prévoir une ouverture au milieu d'un côté de l'enveloppe et deux autres ouvertures dans les coins formés par ce côté et les deux côtés qui lui sont perpendiculaires.

Ces ouvertures peuvent être formées par tout moyen adéquat.

Dans une première forme d'exécution du procédé selon la présente invention, on peut donc introduire une aiguille dans l'enveloppe de pâte avant de procéder au scellage du pourtour de ladite enveloppe. On peut introduire l'aiguille avant ou après la farce et, de préférence, en même temps.

L'aiguille se trouve alors positionnée entre les bords des feuilles superposées ou de la feuille repliée sur elle-même et peut empêcher leur contact, à l'endroit où elle se trouve sur le pourtour de ladite enveloppe, lors du scellage par pincement.

Il en résulte que l'enveloppe de pâte n'est pas uniformément scellée sur son pourtour et présente un endroit où les deux bords ne sont pas joints entre eux. Lorsque l'on retire l'aiguille de l'enveloppe après le scellage, on obtient une ouverture à l'endroit où était positionnée l'aiguille pendant le scellage.

On peut, de préférence, disposer l'aiguille au milieu d'un des côtés de l'enveloppe.

On peut aussi disposer plusieurs aiguilles, sur un seul côté ou réparties, uniformément ou non, sur plusieurs côtés de l'enveloppe de pâte.

Dans une deuxième forme d'exécution du procédé selon la présente invention, on scelle donc l'enveloppe par pincement desdits bords, tout en laissant un segment au moins desdits bords exempts de pincement.

On peut réaliser cette variante à l'aide d'une formeuse ou presse adéquate modifiée de manière qu'un effet de pincement ne soit pas exercé tout le long des bords à sceller mais qu'au moins un segment de ces bords ne soit pas pincé. Si la formeuse comprend par exemple des éléments en relief correspondant au pourtour de l'enveloppe, des éléments correspondants venant pincer l'enveloppe en se rapprochant l'un de l'autre de part et d'autre de son pourtour, on peut prévoir des évidements le long de ces éléments.

Ainsi, lorsque l'on scelle l'enveloppe sur son pourtour, les deux bords de ladite enveloppe situés sous un évidement ne sont pas mis en contact l'un avec l'autre. Il en résulte un segment où ces deux bords ne sont pas joints entre eux, ce qui forme une ouverture dans le pourtour scellé de l'enveloppe.

Lesdits éléments en relief de la formeuse peuvent ainsi comporter un ou plusieurs évidements, qui peuvent être répartis, régulièrement ou non, en fonction de la forme de ladite enveloppe. Si cette dernière est carrée, les éléments en relief de la formeuse peuvent comporter, par exemple, deux évidements situés dans deux coins successifs.

On peut ainsi préparer une pâte alimentaire farcie et séchée présentant au moins une ouverture dans le pourtour scellé de son enveloppe.

On peut préparer, par exemple, une pâte farcie séchée présentant au moins une ouverture située au milieu d'un des côtés de l'enveloppe et/ou dans un des coins de l'enveloppe.

Les exemples ci-après sont donnés à titre d'illustration du procédé et du produit selon la présente invention. Les pourcentages et parties sont indiqués en poids.

Exemple 1

On prépare un mélange contenant 80 parties de farine de blé dur, 12 parties d'oeuf entier, 2 parties d'un émulsifiant, 1,5 parties de sel, 1,5 parties de blanc d'oeuf, 2 parties de gluten et de l'eau, de manière à obtenir un mélange présentant un taux de matière sèche de 68%.

On pétrit le mélange pendant 30 minutes, puis on forme un boudin de pâte par extrusion.

On lamine le boudin successivement sous quatre paires de rouleaux calibrées respectivement, de la première à la quatrième, à 4,5 mm, 1,3 mm, 1,0 mm et 0,8 mm.

On obtient une feuille mère de pâte présentant une épaisseur d'environ 0,8 mm.

On découpe la feuille mère en feuilles de forme rectangulaire de 30 mm de largeur sur 60 mm de longueur, puis on forme, par pliage, une enveloppe de pâte de forme carrée, de 30 mm de côté.

On introduit dans l'enveloppe 0,4 g d'une farce constituée de viande hachée fraîche.

Simultanément, on introduit, dans le plan de l'enveloppe et perpendiculairement au côté, une aiguille dans un des côtés de l'enveloppe de pâte.

On scelle ensuite l'enveloppe sur son pourtour par pincement de ses bords, à l'aide d'une formeuse.

On blanchit les pâtes ainsi obtenues pendant 2 minutes dans de l'eau bouillante à 95-100°C, puis on les sèche dans un séchoir à 80°C pendant environ 6 heures, de manière à obtenir un taux de matière sèche de 95-97% en poids.

On obtient ainsi des pâtes alimentaires farcies séchées présentant une ouverture située dans le pourtour scellé de l'enveloppe, au milieu d'un des côtés de l'enveloppe.

Afin de reconstituer les pâtes alimentaires farcies séchées, on place lesdites pâtes dans un bol, on verse dessus leur équivalent en poids d'eau bouillante et on laisse reposer pendant 5 minutes.

On obtient ainsi des pâtes farcies reconstituées comparables à des pâtes farcies traditionnelles.

Exemple 2

On prépare une feuille mère de pâte de 0,8 mm d'épaisseur de la même manière qu'à l'exemple 1.

On découpe cette feuille mère en bandes de 30 mm de côté, on superpose ces bandes deux à deux et on les découpe de manière à former des enveloppes de pâte de forme carrée de 30 mm de côté.

On introduit dans l'enveloppe 0,4 g d'une farce de viande hachée fraîche.

On scelle l'enveloppe sur son pourtour par pincement de ses bords, à l'aide d'une formeuse comprenant des éléments en relief correspondant au pourtour de l'enveloppe, ces éléments comportant deux évidements situés dans deux coins successifs d'un des côtés, de manière à laisser ces deux coins successifs exempts de pincement.

On blanchit les pâtes ainsi obtenues dans l'eau bouillante pendant 2 à 3 minutes, puis on les sèche dans un séchoir à 80°C pendant environ 3 heures de manière à obtenir un taux de matière sèche de 95-97% en poids.

On obtient ainsi des pâtes alimentaires farcies séchées présentant deux ouvertures situées dans le pourtour scellé de l'enveloppe, dans deux coins successifs.

Afin de reconstituer les pâtes alimentaires farcies séchées, on place lesdites pâtes dans un bol, on verse dessus de l'eau froide, à raison de environ 100 ml d'eau pour 10 g de pâtes et l'on met le bol dans un four microondes pendant 2 minutes.

EP 0 439 806 B1

On obtient ainsi des pâtes farcies reconstituées comparables aux pâtes farcies traditionnelles.

Exemple 3

On mélange les pâtes farcies séchées préparées selon les exemples 1 ou 2 avec une sauce déshydratée afin d'obtenir, après reconstitution, un mets complet. Pour ce faire, on place dans un récipient 50 g de pâtes farcies séchées et 75 g de sauce déshydratée présentant la composition suivante, en % en poids de matière sèche:

| | |
|---|---|
| poudre de tomate | 53,1 |
| sucre | 14,2 |
| sel | 6,4 |
| glutamate de sodium | 3,5 |
| épaississant | 9,7 |
| amidon modifié | 6,4 |
| matière grasse | 3,6 |
| oignon en poudre | 1,6 |
| ail en poudre | 0,5 |
| poivre | 0,1 |
| laurier, origan, persil | 0,9 |

On ajoute ensuite 450 à 500 ml d'eau bouillante au mélange pâtes et sauce, on laisse reposer 5 minutes et l'on obtient un mets reconstitué comparable à un plat de pâtes farcies en sauce tomate traditionnel.

**Revendications**

1. Procédé de préparation de pâtes farcies séchées, dans lequel
   . on prépare une enveloppe de pâte alimentaire à partir de deux feuilles de pâte superposées ou d'une feuille de pâte repliée sur elle-même,
   . on introduit une farce dans ladite enveloppe,
   . on introduit une aiguille entre les bords des feuilles superposées ou de la feuille repliée sur elle-même,
   . on scelle l'enveloppe sur son pourtour par pincement des bords des feuilles superposées ou de la feuille repliée sur elle-même,
   . on retire l'aiguille après le pincement, de manière à aménager au moins une ouverture dans le pourtour scellé de l'enveloppe, et
   . l'on sèche la pâte farcie obtenue.

2. Procédé de préparation de pâtes farcies séchées, dans lequel
   . on prépare une enveloppe de pâte alimentaire à partir de deux feuilles de pâte superposées ou d'une feuille de pâte repliée sur elle-même,
   . on introduit une farce dans ladite enveloppe,
   . on scelle l'enveloppe sur son pourtour par pincement des bords des feuilles superposées ou de la feuille repliée sur elle-même, tout en laissant un segment au moins desdits bords exempt de pincement, de manière à aménager au moins une ouverture dans le pourtour scellé de l'enveloppe, et
   . l'on sèche la pâte farcie obtenue.

3. Pâte alimentaire farcie et séchée, présentant au moins une ouverture dans le pourtour scellé de son enveloppe, susceptible d'être obtenue par le procédé selon l'une des revendications 1 et 2.

5

4. Pâte alimentaire selon la revendication 3, caractérisée par le fait qu'elle présente au moins une ouverture située au milieu d'un des côtés de l'enveloppe.

5. Pâte alimentaire selon la revendication 3, caractérisée par le fait qu'elle présente au moins une ouverture située dans un des coins de l'enveloppe.

**Claims**

1. A process for the preparation of dried filled pasta, in which
   . a pasta envelope is prepared from two superposed leaves of pasta or from one leaf of pasta folded double, after which
   . a filling is introduced into the envelope,
   . a needle is introduced between the edges of the superposed leaves or the leaf folded double,
   . the envelope is sealed around its periphery by crimping of the edges of the superposed leaves or the folded leaf,
   . the needle is withdrawn after crimping to leave at least one opening in the sealed periphery of the envelope and
   . the filled pasta obtained is dried.

2. A process as claimed in claim 1, in which
   . a pasta envelope is prepared from two superposed leaves of pasta or from one leaf of pasta folded double, after which
   . a filling is introduced into the envelope,
   . the envelope is sealed around its periphery by crimping of the edges of the superposed leaves or the folded leaf, at least one segment of the edges being left uncrimped to form at least one opening in the sealed periphery of the envelope and
   . the filled pasta obtained is dried.

3. A dried and filled pasta having at least one opening in the sealed periphery of its envelope capable of being obtained by the process claimed in claim 1 or 2.

4. A pasta as claimed in claim 3, characterized in that it has at least one opening situated in the middle of one of the sides of the envelope.

5. A pasta as claimed in claim 3, characterized in that it has at least one opening situated in one of the corners of the envelope.

**Patentansprüche**

1. Verfahren zur Herstellung von getrockneten gefüllten Teigprodukten, bei welchem
   . aus zwei übereinandergelegten Teigblättern oder einem zusammengeklappten Teigblatt ein Teigmantel hergestellt wird,
   . in diesen Mantel eine Füllung eingebracht wird,
   . zwischen die Ränder der übereinandergelegten Teigblätter oder des zusammengeklappten Teigblatts eine Nadel eingeführt wird,
   . der Mantel an seinem Umfang durch Zusammenklemmen der Ränder der übereinandergelegten Teigblätter oder des zusammengeklappten Teigblattes versiegelt wird,
   . die Nadel nach dem Zusammenklemmen herausgezogen wird, so daß im versiegelten Umfang des Mantels wenigstens eine Öffnung freibleibt, und
   . das erhaltene gefüllte Teigprodukt getrocknet wird.

2. Verfahren zur Herstellung von getrockneten Teigprodukten, bei welchem
   . aus zwei übereinandergelegten Teigblättern oder einem zusammengeklappten Teigblatt ein Teigmantel hergestellt wird,
   . in diesen Mantel eine Füllung eingebracht wird,
   . der Mantel an seinem Umfang durch Zusammenklemmen der Ränder der übereinandergelegten Teigblätter oder des zusammengeklappten Teigblatts versiegelt wird, wobei wenigstens ein Abschnitt dieser Ränder von der Verklemmung ausgenommen bleibt, so daß im versiegelten Umfang des Mantels wenigstens eine Öffnung freibleibt, und

. das erhaltene gefüllte Teigprodukt getrocknet wird.

3. Getrocknetes und gefülltes Teigprodukt mit wenigstens einer Öffnung im versiegelten Umfang seines Mantels, das in dem Verfahren nach einem der Ansprüche 1 und 2 hergestellt werden kann.

4. Teigprodukt nach Anspruch 3, dadurch gekennzeichnet, daß es wenigstens eine in der Mitte einer der Seiten des Mantels gelegene Öffnung aufweist.

5. Teigprodukt nach Anspruch 3, dadurch gekennzeichnet, daß es wenigstens eine in einer der Ecken des Mantels gelegene Öffnung aufweist.